(19) Europäisches Patentamt
European Patent Office
Office européen des brevets

(11) **EP 3 800 087 A1**

(12) **EUROPEAN PATENT APPLICATION**

(43) Date of publication:
**07.04.2021 Bulletin 2021/14**

(21) Application number: **19200808.4**

(22) Date of filing: **01.10.2019**

(51) Int Cl.:
*B60M 3/02* (2006.01)      *H02J 3/34* (2006.01)
*H02J 3/36* (2006.01)      *H02M 1/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ABB Power Grids Switzerland AG 5400 Baden (CH)**

(72) Inventors:
• **Banceanu, Cosmin 5630 Muri AG (CH)**
• **Baerlocher, Eugen 5300 Turgi (CH)**
• **Lucano, Luigi 79761 Waldshut (DE)**

(74) Representative: **AWA Sweden AB P.O. Box 45086 104 30 Stockholm (SE)**

(54) **A METHOD FOR CONTROLLING OPERATION OF A CONVERTER**

(57)     A control and/or processing unit (50) for controlling operation of a converter (10) which is connected intermediate an electrical supply (20) and a power system (30) for transmission of power between the electrical supply and the power system via the converter (10), is disclosed. The control and/or processing unit (50) is configured to control the converter with respect to the contributions from active power or reactive power to the apparent power of the power flow of the converter (10), based on at least one electrical characteristic of the power system (30) and on a predefined relation between voltage at a PCC (40) between the electrical supply (20) and the power system (30) and a plurality of electrical quantities comprising active power and reactive power, respectively, of the apparent power of the power flow of the converter (10) and the at least one electrical characteristic of the power system (30), so as to conform to, or come closer to conforming to, at least one criterion for at least one characteristic of or related to the transmission of power between the electrical supply (20) and the power system (30) via the converter (10), the at least one characteristic being related to at least one of the contribution from active power and the contribution from reactive power to the apparent power of the power flow of the converter (10).

Fig. 1

**Description**

TECHNICAL FIELD

The present invention relates to a method and a control and/or processing unit for controlling operation of a converter.

BACKGROUND

A railway power grid may be operated at a different frequency than the public power grid. Previously, a dedicated power plant was often used to supply the railway power grid with power. In order to efficiently utilize the total power generation capability, it is often preferred to interconnect a railway grid to a public power grid. A converter such as a static frequency converter (SFC) may be used to interconnect an electrical supply, e.g., a public power grid, and a power system, e.g., a railway power grid. Active and reactive power of the SFC may be controlled by means of closed loop control (CLC) software, which may be implemented in a controller for the SFC, and which may utilize references, or setpoints, for the active power and the reactive power for controlling thereof. Capabilities of an SFC may be defined by a so called PQ-diagram, where P stands for active power and Q stands for reactive power. PQ diagrams may change based on changes in the available voltage in a point of common coupling (PCC) between the electrical supply and the power system. In some situations, when load in the railway power grid is relatively high and the PCC voltage is relatively low, both active and reactive power may be demanded from the SFC. This may require that the CLC software prioritizes between the active power and the reactive power. Such prioritization is often implemented as a static prioritization, predefined by way of a parameter.

SUMMARY

It has however been found that static prioritization between the active power and the reactive power potentially can result in a trip of the SFC or instability in the CLC, depending on the voltage of the railway power grid and a ratio between an inductive part of the impedance of the railway power grid and a resistive part of the impedance of the railway power grid.

In view of the foregoing, a concern of the present invention is to provide a method for controlling operation of a converter, such as a SFC, which is connected intermediate an electrical supply and a power system for transmission of power between the electrical supply and the power system via the converter, which reduces or even avoids the risk of a trip of the converter or instability in the control of the converter.

To address at least one of this concern and other concerns, a control and/or processing unit and a method in accordance with the independent claims are provided. Preferred embodiments are defined by the dependent claims.

According to a first aspect, a control and/or processing unit is provided. The control and/or processing unit is for (or configured to) controlling operation of a converter, which is connected intermediate an electrical supply and a power system for transmission of power between the electrical supply and the power system via the converter. The converter is configured so as to capable of controlling power flow of the converter at least with respect to the contributions from active power or reactive power to the apparent power of the power flow of the converter. There is a point of common coupling (PCC) between the electrical supply and the power system. The control and/or processing unit is communicatively connected with the converter for controlling operation thereof. The control and/or processing unit is configured to control the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic being related to (e.g., depending on) at least one of the contribution from active power and the contribution from reactive power to the apparent power of the power flow of the converter.

The controlling of the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter, may be considered as a sharing (e.g., a dynamic sharing) between active power and reactive power contributions to the apparent power of the power flow of the converter so as to obtain, or come closer to obtaining, an improved or even optimized operating point in a PQ-diagram with respect to the at least one criterion.

As will be further described in the following, the predefined relation between voltage at the PCC and a plurality of electrical quantities comprising active power and reactive power, respectively, of the apparent power of the power flow of the converter and the at least one electrical characteristic of the power system may for example be described or governed by the following equation:

$$U_{PCC}^2 = U_G^2 \cdot \left( \frac{1}{2} + \frac{P + Q \cdot XR}{K_S \cdot \sqrt{1 + XR^2}} + \sqrt{\left( \frac{1}{2} + \frac{P + Q \cdot XR}{K_S \cdot \sqrt{1 + XR^2}} \right)^2 - \frac{P^2 + Q^2}{K_S^2}} \right)$$

In the equation above, $U_{PCC}$ is voltage at the PCC (which may be referred to as the PCC voltage), $U_G$ is a voltage of the power system, P is active power, Q is reactive power, $XR$ is a ratio between an inductive part of the impedance of the power system and a resistive part of the impedance of the power system, and Ks is a ratio between the short-circuit power of the power system and the rated operating power flow of the converter. However, as a person skilled in the art will recognize, another or relations between voltage at the PCC and a plurality of electrical quantities comprising active power and reactive power, respectively, of the apparent power of the power flow of the converter and the at least one electrical characteristic of the power system could be employed in order to achieve the controlling of the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter.

As can be seen from the equation above, the PCC voltage is dependent on the relation between the active power and reactive power and on at least one electrical characteristic of the power system. The electrical characteristic(s) of the power system might instead be referred to as power system parameters, or power grid parameters, or grid parameters, without any loss of generality.

If the power system would be mainly resistive, in which case $XR$ would be relatively low, then the magnitude of the PCC voltage would depend mainly on the active power. If the power system would be mainly inductive, in which case $XR$ would be relatively high, then the magnitude of the PCC voltage would depend mainly on the reactive power. If the power system is "strong", which in the context of the present application means that Ks would be relatively high, the PCC voltage would not be much affected by the power delivered by the converter. The controlling of the converter by the control and/or processing unit according to the first aspect may be especially advantageous for the case where the power system is relatively "weak", which in the context of the present application means that Ks would be relatively low.

Based on the equation above, it can be seen that based on knowledge of the electrical characteristic(s) of the power system, the contributions from active power or reactive power to the apparent power of the power flow of the converter can then be controlled in order to, for example, achieve conformance, or come closer to achieving conformance, of the PCC voltage to a selected reference PCC voltage. Thus, the controlling of the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter, may be considered as a sharing (e.g., a dynamic sharing) between active power and reactive power contributions to the apparent power of the power flow of the converter so as to conform to, or come closer to conforming to, at least one criterion for at least one characteristic of or related to the transmission of power between the electrical supply and the power system via the converter, such as conformance of the PCC voltage to a selected reference PCC voltage. It is to be understood that the controlling may be based on another criterion or other criteria than conformance of the PCC voltage to a selected reference PCC voltage.

Further, by the controlling of the converter with respect to the contributions from active power or reactive power to the apparent power of the power flow of the converter based on at least one electrical characteristic of the power system, the contributions from active power or reactive power to the apparent power of the power flow of the converter can controlled taking into account condition(s) of the power system. This may reduce or even avoid the risk of a trip of the converter or instability in the controlling occurring as compared to using a static prioritization between the active power and the reactive power.

The communicative coupling between the control and/or processing unit and the converter may be realized or implemented for example by means of any appropriate wired and/or wireless communication means or techniques as known in the art.

In the context of the present application, the expression "power flow of the converter" encompasses contributions from active power and/or reactive power to the apparent power of the power flow of the converter, such as active power generated on the PCC side of the converter, active power flowing through the converter, etc.

The converter may for example be configured at least in part to convert DC power to AC power, or vice versa.

As mentioned in the foregoing, the converter is configured so as to capable of controlling power flow through the converter between the electrical supply and the power system. Such functionality and capability of a converter can, as known in the art, be realized in different ways, and detailed description thereof herein is therefore omitted.

The converter may for example be configured to be connected to a railway power grid. The power system may for example comprise or be constituted by a (or the) railway power grid.

In alternative or in addition, the converter may be configured to be connected to at least one of a public power grid (or utility grid), a power source, and a renewable energy grid. The electrical supply may for example comprise or be constituted by at least one of the public power grid, the power source and the renewable energy power grid. For example, the renewable energy power grid may for example comprise a wind farm. The power source may comprise or be constituted in principle by any type of power source. For example, the power source may comprise or be constituted by one or more battery storage units, one or more private power sources (e.g., non-public power sources), and/or one or more fuel cells.

The control and/or processing unit may be communicatively connected with a sensor unit (or several sensor units). The sensor unit may for example be comprised in or be constituted by some entity that controls and/or monitors operation of the power system. The control and/or processing unit may be configured to receive the at least one electrical characteristic of the power system from the sensor unit, which may be configured to sense at least one of the at least one electrical characteristic of the power system. The communicative coupling between the control and/or processing unit and the sensor unit may be realized or implemented for example by means of any appropriate wired and/or wireless communication means or techniques as known in the art.

In alternative, or in addition, the control and/or processing unit may be configured to receive at least one electrical quantity of the power system (e.g., from some entity that controls and/or monitors operation of the power system), and based on the at least one electrical quantity of the power system, derive at least one of the at least one electrical characteristic of the power system. In alternative, or in addition, the sensor unit may be configured to derive at least one of the at least one electrical characteristic of the power system based on the at least one electrical quantity of the power system.

The sensor unit may be configured to sense, or carry out a sensing operation of, at least one electrical characteristic of the power system (e.g., of a first electrical characteristic of the power system) at some time instant, or carry out several sensing operations of the at least one electrical characteristic of the power system (e.g., of the first electrical characteristic of the power system) at different time instants, e.g. at successive time instants during a certain period of time. The result of the several sensing operations of the at least one electrical characteristic of the power system may be averaged over time (e.g., over the certain period of time).

The sensor unit may be configured to sense, or carry out a sensing operation of, the respective ones of two or more different electrical characteristics of the power system (e.g., of a first electrical characteristic of the power system and a second electrical characteristic of the power system) at some time instant, or carry out several sensing operations of the respective ones of the two or more different electrical characteristics of the power system (e.g., of the first electrical characteristic of the power system and the second electrical characteristic of the power system) at different time instants, e.g. at successive time instants during a certain period of time. The result of the several sensing operations of the respective ones of the two or more different electrical characteristics of the power system may be averaged over time (e.g., over the certain period of time).

Thus, the at least one electrical characteristic of the power system may be constituted by at least one time-averaged electrical characteristic of the power system.

The sensor unit may be configured to sense the at least one electrical characteristic of the power system continuously or continually, so as to produce data for the at least one electrical characteristic of the power system for a plurality of successive time instants. The data may be provided to the control and/or processing unit, which may employ the data to carry out the controlling of the converter with respect to the contributions from active power or reactive power to the apparent power of the power flow of the converter repeatedly, e.g., over a period of time. Accordingly, the control and/or processing unit may carry out a control loop for controlling the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter, e.g., over a period of time.

The above-mentioned sensor unit, or some other sensor unit, may be configured to sense other quantities than the at least one electrical characteristic of the power system, such as, for example, the PCC voltage. The PCC voltage may be sensed at some time instant, or at different time instants, e.g. at successive time instants during a certain period of time, and the sensed PCC voltages may be averaged over time (e.g., over the certain period of time).

The at least one characteristic of or related to the transmission of power between the electrical supply and the power system via the converter may for example comprise the voltage at the PCC. The voltage at the PCC depends on the contributions from active power and reactive power to the apparent power of the power flow of the converter. The at least one criterion for the at least one characteristic of or related to the transmission of power between the electrical supply and the power system via the converter may comprise conformance of the voltage at the PCC to a selected reference voltage at the PCC. The control and/or processing unit may for example be configured to carry out the controlling of the converter based on the at least one electrical characteristic of the power system so that any difference between the voltage at the PCC as determined by the predefined relation and the reference voltage at the PCC decreases.

The selected reference voltage at the PCC may for example be predefined, and may depend on the particular configuration, design and/or construction of the power system and/or the electrical supply, and desired characteristics of the transmission of power between the electrical supply and the power system such as a rated or allowed power flow or rated or allowed power flow range between the electrical supply and the power system.

The at least one electrical characteristic of the power system may vary with time. The control and/or processing unit may be configured to carry out the controlling of the converter repeatedly based on the at least one electrical characteristic of the power system at different time instants until any difference between the voltage at the PCC as determined by the predefined relation and the reference voltage at the PCC is less than a selected threshold voltage difference.

In alternative or in addition, the at least one characteristic of or related to the transmission of power between the electrical supply and the power system via the converter may comprise the apparent power of the power flow of the converter. The apparent power of the power flow of the converter depends on the contributions from active power and reactive power to the apparent power of the power flow of the converter. And in alternative or in addition, the at least one criterion for the at least one characteristic of or related to the transmission of power between the electrical supply and the power system via the converter may comprise conformance of the apparent power of the power flow of the converter to a maximally possible apparent power of the power flow of the converter at a given voltage at the PCC.

The at least one criterion for the at least one characteristic of or related to the transmission of power between the electrical supply and the power system via the converter may be related to cost aspects.

For example, in alternative or in addition, the at least one characteristic of or related to the transmission of power between the electrical supply and the power system via the converter may comprise the apparent power of the power flow of the converter. And in alternative or in addition, the at least one criterion for the at least one characteristic of or related to the transmission of power between the electrical supply and the power system via the converter may comprise the apparent power of the power flow of the converter being below a selected apparent power threshold value. By the apparent power of the power flow of the converter being below a selected apparent power threshold value, or coming closer to being below a selected apparent power threshold value, a cost related to the transmission of power between the electrical supply and the power system via the converter may be kept below any limit for the cost which may be imposed on the transmission.

In alternative or in addition, the at least one characteristic of or related to the transmission of power between the electrical supply and the power system via the converter may comprise power loss in the power system. And in alternative or in addition, the at least one criterion for the at least one characteristic of or related to the transmission of power between the electrical supply and the power system via the converter may comprise the power loss in the power system being minimal. By the power loss in the power system being minimal, or coming closer to being minimal, costs related to the transmission of power between the electrical supply and the power system via the converter may be reduced.

The power loss in the power system is related the contributions from active power and reactive power to the apparent power of the power flow of the converter. Power loss in the power system may be defined by a relation between the power system impedance and the power system current, and may depend on the power system current by the power system current squared. Thus, one way of reducing power loss in the power system is by reducing the current flow between the converter and the load. Based on the power system impedance, a certain PCC voltage will give a minimal power loss in the power system. In order to obtain that certain PCC voltage, the converter may be controlled with respect to the contributions from active power or reactive power to the apparent power of the power flow of the converter.

The control and/or processing unit may be configured to carry out the controlling of the converter based on (a combination of) several criteria. In accordance with one or more exemplifying embodiments of the present invention, the control and/or processing unit may be configured to control the converter so as to conform to, or come closer to conforming to, each of a plurality of criteria for respective ones of a plurality of characteristics of the transmission of power between the electrical supply and the power system via the converter. The plurality of characteristics of the transmission of power between the electrical supply and the power system via the converter may comprise the voltage at the PCC and the apparent power of the power flow of the converter. The plurality of criteria for the respective ones of a plurality of characteristics of the transmission of power between the electrical supply and the power system via the converter may comprise at least two of: conformance of the voltage at the PCC to a selected reference voltage at the PCC, conformance of the apparent power of the power flow of the converter to a maximally possible apparent power of the power flow of the converter at a given voltage at the PCC, and the apparent power of the power flow of the converter being below a selected apparent power threshold value.

The control and/or processing unit may be configured to set limits for values of the active power and the reactive power, respectively, of the power flow of the converter based on the apparent power.

The at least one electrical characteristic of the power system may for example comprise at least one of: a voltage of the power system, an impedance of the power system, a short-circuit power of the power system, an inductive part of the impedance of the power system, a resistive part of the impedance of the power system, and a ratio between an inductive part of the impedance of the power system and a resistive part of the impedance of the power system.

According to the predefined relation, the voltage at the PCC may be (further) related to at least one characteristic of the converter. The at least one characteristic of the converter may for example comprise a rated operating power flow of the converter. The control and/or processing unit may be configured to control the converter with respect to the contributions from active power or reactive power to the apparent power of the power flow of the converter, further based on the at least one characteristic of the converter.

The rated operating power flow of the converter, which may also be referred to as an allowed operating power flow of the converter, may for example be within an allowed or rated operating power flow range for the converter. The allowed or rated operating power flow range for the converter may for example be predefined, and may depend on the particular configuration, design and/or construction of the converter.

The at least one electrical characteristic of the power system may for example comprise a short-circuit power of the power system.

The at least one electrical characteristic of the power system may for example comprise a ratio between the short-circuit power of the power system and the rated operating power flow of the converter.

The at least one electrical characteristic of the power system may for example comprise a ratio between an inductive part of an impedance of the power system and a resistive part of the power system.

As mentioned in the foregoing, the predefined relation between voltage at the PCC and a plurality of electrical quantities comprising active power and reactive power, respectively, of the apparent power of the power flow of the converter and the at least one electrical characteristic of the power system may for example be described or governed by the following equation:

$$U_{PCC}^2 = U_G^2 \cdot \left( \frac{1}{2} + \frac{P + Q \cdot XR}{K_S \cdot \sqrt{1 + XR^2}} + \sqrt{\left( \frac{1}{2} + \frac{P + Q \cdot XR}{K_S \cdot \sqrt{1 + XR^2}} \right)^2 - \frac{P^2 + Q^2}{K_S^2}} \right)$$

In the equation above, $U_{PCC}$ is voltage at the PCC, $U_G$ is a voltage of the power system, $P$ is active power, $Q$ is reactive power, $XR$ is a ratio between an inductive part of the impedance of the power system and a resistive part of the impedance of the power system, and $K_S$ is a ratio between the short-circuit power of the power system and the rated operating power flow of the converter.

The at least one electrical characteristic of the power system may vary with time. The control and/or processing unit may be configured to carry out the controlling of the converter repeatedly based on the at least one electrical characteristic of the power system. The control and/or processing unit may for example be configured to carry out the controlling of the converter repeatedly based on the at least one electrical characteristic of the power system at different time instants (e.g., successive time instants over a certain period of time). The control and/or processing unit may be configured to repeat the controlling of the converter based on the at least one electrical characteristic of the power system on a condition that at least one of the at least one electrical characteristic of the power system has changed (e.g., by a predefined threshold difference value) since the last time the controlling of the converter based on the at least one electrical characteristic of the power system was carried out. Accordingly, the control and/or processing unit may carry out a control loop, e.g., a closed control loop, for controlling the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter, e.g., over a period of time.

According to a second aspect, a method for controlling operation of a converter, which is connected intermediate an electrical supply and a power system for transmission of power between the electrical supply and the power system via the converter, is provided. The converter is configured so as to capable of controlling power flow of the converter at least with respect to the contributions from active power or reactive power to the apparent power of the power flow of the converter. There is a PCC between the electrical supply and the power system. The method comprises controlling the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic being related to at least one of the contribution from active power and the contribution from reactive power to the apparent power of the power flow of the converter.

According to a third aspect, a computer program product is provided. The computer program product is configured to, when executed in a control and/or processing unit according to the first aspect, perform a method according to the second aspect. The computer program product may for example be comprised in, or constitute, a closed loop control system.

According to a fourth aspect, a computer-readable storage medium is provided. On the computer-readable storage medium there is stored a computer program product configured to, when executed in a control and/or processing unit according to the first aspect, perform a method according to the second aspect.

According to a fifth aspect, an arrangement is provided. The arrangement comprises a converter, which is connected intermediate an electrical supply and a power system for transmission of power between the electrical supply and the power system via the converter. The converter is configured so as to capable of controlling power flow of the converter at least with respect to the contributions from active power or reactive power to the apparent power of the power flow of the converter. There is a PCC between the electrical supply and the power system. The arrangement comprises a control and/or processing unit according to the first aspect, which is communicatively connected with the converter for controlling operation thereof. The control and/or processing unit is configured to control the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic relating to at least one of the contribution from active power and the contribution from reactive power to the apparent power of the power flow of the converter.

According to a sixth aspect, a converter is provided. The converter is configured for use in conjunction with an arrangement according to the fifth aspect. The operation of the converter is controlled by the control and/or processing unit comprised in the arrangement according to the fifth aspect. The converter is configured to be connected intermediate an electrical supply and a power system for transmission of power between the electrical supply and the power system via the converter. The converter is configured so as to capable of controlling power flow of the converter at least with respect to the contributions from active power or reactive power to the apparent power of the power flow of the converter.

Further objects and advantages of the present invention are described in the following by means of exemplifying embodiments. It is noted that the present invention relates to all possible combinations of features recited in the claims. Further features of, and advantages with, the present invention will become apparent when studying the appended claims and the description herein. Those skilled in the art realize that different features of the present invention can be combined to create embodiments other than those described herein.

BRIEF DESCRIPTION OF THE DRAWINGS

Exemplifying embodiments of the present invention will be described below with reference to the accompanying drawings.

Figure 1 is a schematic view of an arrangement according to an embodiment of the present invention.
Figure 2 is a schematic flowchart of a method according to an embodiment of the present invention.

All the figures are schematic, not necessarily to scale, and generally only show parts which are necessary in order to elucidate embodiments of the present invention, wherein other parts may be omitted or merely suggested.

DETAILED DESCRIPTION

The present invention will now be described hereinafter with reference to the accompanying drawings, in which exemplifying embodiments of the present invention are shown. The present invention may, however, be embodied in many different forms and should not be construed as limited to the embodiments of the present invention set forth herein; rather, these embodiments are provided by way of example so that this disclosure will convey the scope of the present invention to those skilled in the art.

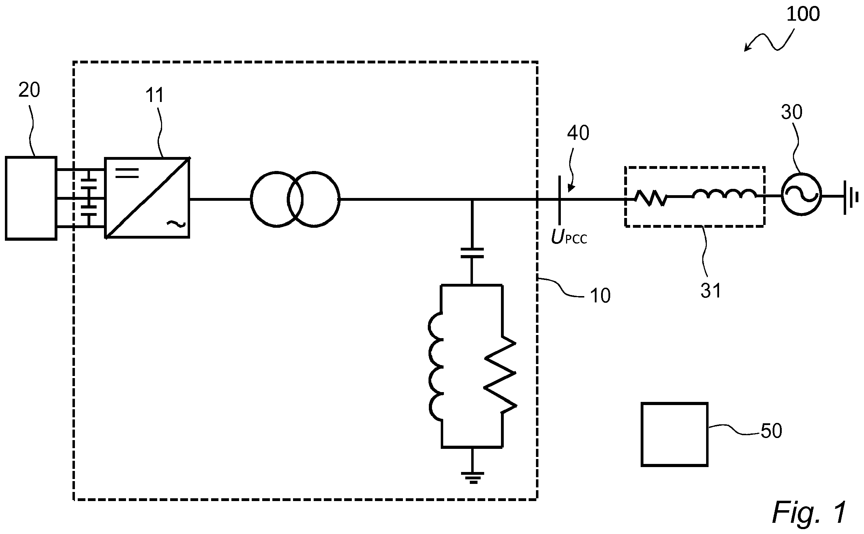

Figure 1 is a schematic view of an arrangement 100 according to an embodiment of the present invention. The arrangement 100 comprises a converter 10, which is connected intermediate an electrical supply 20 and a power system 30 for transmission of power between the electrical supply 20 and the power system 30 via the converter 10.

The power system 30 may for example comprise or be constituted by the railway power grid. The electrical supply 20 may for example comprise or be constituted by at least one of a public power grid, a power source, or a renewable energy power grid, but is not limited thereto. The power source may comprise or be constituted in principle by any type of power source. For example, the power source may comprise or be constituted by one or more battery storage units, one or more private power sources (e.g., non-public power sources), and/or one or more fuel cells.

The converter 10 is configured so as to capable of controlling power flow of the converter 10 at least with respect to the contributions from active power or reactive power to the apparent power of the power flow of the converter 10. Such capability of a converter can, as known in the art, be realized in different ways, and detailed description thereof herein is therefore omitted.

The converter 10 may for example be configured at least in part to convert DC power to AC power, or vice versa. In accordance with the embodiment of the present invention illustrated in Figure 1, the converter 10 may comprise converting circuitry, or a converting module, 11, which may be configured to provide this functionality of the converter 10. Further in accordance with the embodiment of the present invention illustrated in Figure 1, the converting circuitry or the converting module 11 is connected via capacitors to the electrical supply 20, and further to the power system 30 via a transformer and an RLC circuit. It is to be understood that the exact configuration of the converter 10 as illustrated in Figure 1 is exemplifying, and that variations are possible.

As illustrated in Figure 1, there is a point of common coupling (PCC) 40 between the electrical supply 20 and the power system 30. The RL circuit 31 between the PCC 40 and the power system 30 may represent the impedance of the power system 30.

The arrangement 100 comprises a control and/or processing unit 50, which is communicatively connected with the converter 10 for controlling operation thereof. The communicative coupling between the control and/or processing unit 50 and the converter 10 may be realized or implemented for example by means of any appropriate wired and/or wireless communication means or techniques as known in the art.

The control and/or processing unit 50 is configured to control the converter 10 with respect to the contributions from active power or reactive power to the apparent power of the power flow of the converter 10, based on at least one electrical characteristic of the power system 30 and on a predefined relation between voltage $U_{PCC}$ at the PCC 40 and a plurality of electrical quantities comprising active power and reactive power, respectively, of the apparent power of the power flow of the converter 10 and the at least one electrical characteristic of the power system 30, so as to conform to, or come closer to conforming to, at least one criterion for at least one characteristic of or related to the transmission of power between the electrical supply 20 and the power system 30 via the converter 10, the at least one characteristic relating to at least one of the contribution from active power and the contribution from reactive power to the apparent power of the power flow of the converter 10.

The control and/or processing unit 50 may be communicatively connected with a sensor unit, or several sensor units. The sensor unit(s) (not shown in Figure 1) may for example be comprised in or be constituted by some entity that controls and/or monitors operation of the power system 30. The control and/or processing unit 50 may for example be configured to receive the at least one electrical characteristic of the power system 30 from the sensor unit, which may be configured to sense at least one of the at least one electrical characteristic of the power system 30. The communicative coupling between the control and/or processing unit 50 and the sensor unit may be realized or implemented for example by means of any appropriate wired and/or wireless communication means or techniques as known in the art.

By the controlling of the converter 10 with respect to the contributions from active power or reactive power to the apparent power of the power flow of the converter 10 based on at least one electrical characteristic of the power system 30, the contributions from active power or reactive power to the apparent power of the power flow of the converter 10 can controlled taking into account condition(s) of the power system 30. This may reduce or even avoid the risk of a trip of the converter 10 or instability in the controlling of the converter 10 occurring as compared to using a static prioritization between the active power and the reactive power.

It has been found, inter alia by means of power system simulations, that for an arrangement similar to the one illustrated in Figure 1, with the converter in the form of a SFC, and with the power system being a railway power grid and the electrical supply being a public power grid, for example, the use of a static prioritization between the active power and the reactive power may result in a trip of the SFC or instability in the CLC, depending on the voltage of the railway power grid and a ratio $XR$ between an inductive part of the impedance of the railway power grid and a resistive part of the impedance of the railway power grid. It has for example been found that using a static prioritization between the active power and the reactive power, for $XR = 3$ and for relatively low PCC voltages (e.g., 0.7 pu (per-unit)), the SFC is likely to trip if active power is prioritized over reactive power; for $XR = 10$ and for relatively low PCC voltages (e.g., 0.8 pu), the SFC is likely to trip if active power is prioritized over reactive power; and for $XR = 1$ and for PCC voltages close to or at nominal levels (e.g., 0.95 pu), the SFC is likely to experience power fluctuations if reactive power is prioritized over active power. By the controlling of the converter 10 with respect to the contributions from active power or reactive power to the apparent power of the power flow of the converter 10 based on at least one electrical characteristic of the power system 30 according to one or more embodiments of the present invention as described herein, the risk of a trip of the converter 10 or instability in the controlling of the converter 10 occurring may be reduced or even avoided as compared to using a static prioritization between the active power and the reactive power.

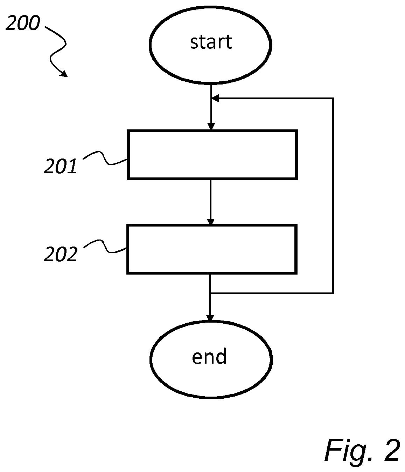

Figure 2 is a schematic flowchart of a method 200 according to an embodiment of the present invention. The method 200 is a method for controlling operation of a converter, which is connected intermediate an electrical supply and a power system for transmission of power between the electrical supply and the power system via the converter.

The converter is configured so as to capable of controlling power flow of the converter at least with respect to the contributions from active power or reactive power to the apparent power of the power flow of the converter. There is a PCC between the electrical supply and the power system.

The method 200 may comprise, at 201, sensing the at least one electrical characteristic of the power system. The sensing may for example be carried out by means of a sensor unit as described in the foregoing with reference to Figure 1.

The method 200 comprises, at 202, controlling the converter with respect to the contributions from active power or reactive power to the apparent power of the power flow of the converter, based on at least one electrical characteristic of the power system (e.g., as obtained at 201) and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic being related to at least one of the contribution from active power and the contribution from reactive power to the apparent power of the power flow of the converter.

The method 200 may then end.

The method 200 may however not end, and the step 202 and possibly also the step 201 may be carried out repeatedly, e.g., over a period of time, as indicated by the line immediately before "end" going back to immediately after "start". Accordingly, the method 200 may comprise or constitute a control loop, e.g. a close control loop, for controlling the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter, e.g., over a period of time. The controlling the converter with respect to the contributions from active power or reactive power to the apparent power of the power flow of the converter so as to conform to, or come closer to conforming to, at least one criterion for at least one characteristic of or related to the transmission of power between the electrical supply and the power system via the converter may for example be carried out when or whenever a change in the at least one electrical characteristic of the power system is sensed or determined.

While the present invention has been illustrated in the appended drawings and the foregoing description, such illustration is to be considered illustrative or exemplifying and not restrictive; the present invention is not limited to the disclosed embodiments. Other variations to the disclosed embodiments can be understood and effected by those skilled in the art in practicing the claimed invention, from a study of the drawings, the disclosure, and the appended claims. In the appended claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A control and/or processing unit (50) for controlling operation of a converter (10) which is connected intermediate an electrical supply (20) and a power system (30) for transmission of power between the electrical supply and the power system via the converter, wherein the converter is configured so as to capable of controlling power flow of the converter at least with respect to the contributions from active power or reactive power to the apparent power of the power flow of the converter, wherein there is a point of common coupling, PCC, (40) between the electrical supply and the power system, wherein the control and/or processing unit is communicatively connected with the converter for controlling operation thereof, and wherein the control and/or processing unit is configured to:
control the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic being related to at least one of the contribution from active power and the contribution from reactive power to the apparent power of the power flow of the converter.

2. A control and/or processing unit according to claim 1, wherein the at least one characteristic of or related to the transmission of power between the electrical supply and the power system via the converter comprises the voltage at the PCC, and wherein the at least one criterion for the at least one characteristic of or related to the transmission of power between the electrical supply and the power system via the converter comprises conformance of the voltage at the PCC to a selected reference voltage at the PCC, and wherein the control and/or processing unit is configured to carry out the controlling of the converter based on the at least one electrical characteristic of the power system so that any difference between the voltage at the PCC as determined by the predefined relation and the reference voltage at the PCC decreases.

3. A control and/or processing unit according to claim 2, wherein the at least one electrical characteristic of the power system may vary with time, and wherein the control and/or processing unit is configured to carry out the controlling of the converter repeatedly based on the at least one electrical characteristic of the power system at different time instants until any difference between the voltage at the PCC as determined by the predefined relation and the reference voltage at the PCC is less than a selected threshold voltage difference.

4. A control and/or processing unit according to any one of claims 1-3, wherein the at least one characteristic of or related to the transmission of power between the electrical supply and the power system via the converter comprises the apparent power of the power flow of the converter, and wherein the at least one criterion for the at least one characteristic of or related to the transmission of power between the electrical supply and the power system via the converter comprises conformance of the apparent power of the power flow of the converter to a maximally possible apparent power of the power flow of the converter at a given voltage at the PCC.

5. A control and/or processing unit according to any one of claims 1-4, wherein the at least one characteristic of or related to the transmission of power between the electrical supply and the power system via the converter comprises the apparent power of the power flow of the converter, and wherein the at least one criterion for the at least one characteristic of or related to the transmission of power between the electrical supply and the power system via the converter comprises the apparent power of the power flow of the converter being below a selected apparent power threshold value.

6. A control and/or processing unit according to any one of claims 1-4, wherein the at least one characteristic of or related to the transmission of power between the electrical supply and the power system via the converter comprises power loss in the power system, and wherein the at least one criterion for the at least one characteristic of or related to the transmission of power between the electrical supply and the power system via the converter comprises the power loss in the power system being minimal.

7. A control and/or processing unit according to claim 1, wherein the control and/or processing unit is configured to control the converter so as to conform to, or come closer to conforming to, each of a plurality of criteria for respective ones of a plurality of characteristics of the transmission of power between the electrical supply and the power system via the converter;
wherein the plurality of characteristics of the transmission of power between the electrical supply and the power system via the converter comprise: the voltage at the PCC, and the apparent power of the power flow of the converter; and
wherein the plurality of criteria for the respective ones of a plurality of characteristics of the transmission of power between the electrical supply and the power system via the converter comprise at least two of: conformance of the voltage at the PCC to a selected reference voltage at the PCC, conformance of the apparent power of the power flow of the converter to a maximally possible apparent power of the power flow of the converter at a given voltage at the PCC, and the apparent power of the power flow of the converter being below a selected apparent power threshold value.

8. A control and/or processing unit according to any one of claims 1-7, wherein the at least one electrical characteristic of the power system comprises at least one of:

a voltage ($U_G$) of the power system;
an impedance of the power system;
a short-circuit power of the power system;
an inductive part of the impedance of the power system;
a resistive part of the impedance of the power system; and
a ratio between an inductive part of the impedance of the power system and a resistive part of the impedance of the power system.

9. A control and/or processing unit according to any one of claims 1-8, wherein according to the predefined relation, the voltage at the PCC is further related to at least one characteristic of the converter, wherein the at least one characteristic of the converter comprises a rated operating power flow of the converter, and wherein the control and/or processing unit is configured to control the converter with respect to the contributions from active power or reactive power to the apparent power of the power flow of the converter, further based on the at least one characteristic of the converter, and wherein the at least one electrical characteristic of the power system comprises a short-circuit power of the power system, and wherein the at least one electrical characteristic of the power system comprises a ratio between the short-circuit power of the power system and the rated operating power flow of the converter, and wherein the at least one electrical characteristic of the power system comprises a ratio between an inductive part of an impedance of the power system and a resistive part of the power system.

10. A control and/or processing unit according to any one of claims 1-9, wherein the at least one electrical characteristic of the power system may vary with time, and wherein the control and/or processing unit is configured to carry out the controlling of the converter repeatedly based on the at least one electrical characteristic of the power system, wherein the control and/or processing unit is configured to repeat the controlling of the converter based on the at least one electrical characteristic of the power system on a condition that at least one of the at least one electrical characteristic of the power system has changed since the last time the controlling of the converter based on the at least one electrical characteristic of the power system was carried out.

11. A method (200) for controlling operation of a converter which is connected intermediate an electrical supply and a power system for transmission of power between the electrical supply and the power system via the converter, wherein the converter is configured so as to capable of controlling power flow of the converter at least with respect to the contributions from active power or reactive power to the apparent power of the power flow of the converter, wherein there is a point of common coupling, PCC, between the electrical supply and the power system, the method comprising:
controlling (202) the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic being related to at least one of the contribution from active power and the contribution from reactive power to the apparent power of the power flow of the converter.

12. A computer program product configured to, when executed in a control and/or processing unit (50) according to any one of claims 1-10, perform a method (200) according to claim 11.

13. An arrangement (100) comprising:

a converter (10) connected intermediate an electrical supply (20) and a power system (30) for transmission of power between the electrical supply and the power system via the converter, wherein the converter is configured so as to capable of controlling power flow of the converter at least with respect to the contributions from active power or reactive power to the apparent power of the power flow of the converter, wherein there is a point of common coupling, PCC, (40) between the electrical supply and the power system; and
a control and/or processing unit (50) according to any one of claims 1-10 communicatively connected with the converter for controlling operation thereof, wherein the control and/or processing unit is configured to:
control the converter with respect to the contributions from active power or reactive power to the apparent power of the power flow of the converter, based on at least one electrical characteristic of the power system and on a predefined relation between voltage at the PCC and a plurality of electrical quantities comprising active power and reactive power, respectively, of the apparent power of the power flow of the converter and the at least one electrical characteristic of the power system, so as to conform to, or come closer to conforming to, at least one criterion for at least one characteristic of or related to the transmission of power between the electrical supply and the power system via the converter, the at least one characteristic relating to at least one of the contribution from active power and the contribution from reactive power to the apparent power of the power flow of the converter.

14. A converter (10) configured for use in conjunction with an arrangement (100) according to claim 13, wherein the operation of the converter is controlled by the control and/or processing unit comprised in the arrangement, wherein the converter is configured to be connected intermediate an electrical supply (20) and a power system (30) for

EP 3 800 087 A1

transmission of power between the electrical supply and the power system via the converter, wherein the converter is configured so as to capable of controlling power flow of the converter at least with respect to the contributions from active power or reactive power to the apparent power of the power flow of the converter.

15. An arrangement according to claim 13 or a converter according to claim 14, wherein:

the converter is configured to be connected to a railway power grid, wherein the power system comprises or is constituted by the railway power grid; and/or
the converter is configured to be connected to at least one of a public power grid, a power source, and a renewable energy grid, wherein the electrical supply comprises or is constituted by at least one of the public power grid, the power source and the renewable energy power grid.

Fig. 1

EP 3 800 087 A1

Fig. 2

Europäisches
Patentamt

European
Patent Office

Office européen
des brevets

## EUROPEAN SEARCH REPORT

Application Number

EP 19 20 0808

## DOCUMENTS CONSIDERED TO BE RELEVANT

| Category | Citation of document with indication, where appropriate, of relevant passages | Relevant to claim |
|---|---|---|
| X | CN 107 968 425 A (CHINA ELECTRIC POWER RES INST; STATE GRID CORP CHINA ET AL.) 27 April 2018 (2018-04-27) | 1-3,8-15 |
| Y | * figures 2-3 * * paragraph [0067] - paragraph [0094] * | 4-7 |
| X | US 2017/104333 A1 (PREMERLANI WILLIAM JAMES [US] ET AL) 13 April 2017 (2017-04-13) | 1-3,8, 10-15 |
| Y | * figures 1,3 * * paragraph [0013] - paragraph [0021] * | 4-7 |
| Y | JASIM OMAR ET AL: "Advanced control method for VSC-HVDC systems connected to weak grids", 2016 18TH EUROPEAN CONFERENCE ON POWER ELECTRONICS AND APPLICATIONS (EPE'16 ECCE EUROPE), JOINTLY OWNED BY IEEE-PELS AND EPE ASSOCIATION, 27 October 2016 (2016-10-27), pages 1-10, XP032985237, DOI: 10.1109/EPE.2016.7695520 [retrieved on 2016-10-25] * Section "Proposed AC reference currents based on instantaneous power theory" * | 4,5,7 |
| Y | CN 108 270 232 A (UNIV SHANGHAI ELECTRIC POWER) 10 July 2018 (2018-07-10) * paragraph [0079] - paragraph [0081] * | 5,7 |
| Y | US 2014/046500 A1 (VARMA RAJIV KUMAR [CA]) 13 February 2014 (2014-02-13) * paragraph [0014] - paragraph [0018] * | 6,7 |

-/--

**CLASSIFICATION OF THE APPLICATION (IPC)**

INV.
B60M3/02
H02J3/34
H02J3/36

ADD.
H02M1/00

**TECHNICAL FIELDS SEARCHED (IPC)**

B60M
H02J
H02M

The present search report has been drawn up for all claims

| Place of search | Date of completion of the search | Examiner |
|---|---|---|
| Munich | 5 March 2020 | Chabas, Julien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

**EUROPEAN SEARCH REPORT**

Application Number

EP 19 20 0808

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LARS ABRAHAMSSON ET AL: "Use of converters for feeding of AC railways for all frequencies", ENERGY SUSTAINABLE DEVELOPMENT, vol. 16, no. 3, 9 June 2012 (2012-06-09), pages 368-378, XP055674180, IN ISSN: 0973-0826, DOI: 10.1016/j.esd.2012.05.003 * abstract * ----- | 15 | |

| | | TECHNICAL FIELDS SEARCHED (IPC) |

The present search report has been drawn up for all claims

| Place of search | Date of completion of the search | Examiner |
|---|---|---|
| Munich | 5 March 2020 | Chabas, Julien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 19 20 0808

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2020

| Patent document cited in search report | | Publication date | Patent family member(s) | | Publication date |
|---|---|---|---|---|---|
| CN 107968425 | A | 27-04-2018 | NONE | | |
| US 2017104333 | A1 | 13-04-2017 | US<br>WO | 2017104333 A1<br>2017062109 A1 | 13-04-2017<br>13-04-2017 |
| CN 108270232 | A | 10-07-2018 | NONE | | |
| US 2014046500 | A1 | 13-02-2014 | US<br>US<br>WO | 2014046500 A1<br>2017031379 A1<br>2014022929 A1 | 13-02-2014<br>02-02-2017<br>13-02-2014 |

EPO FORM P0459

For more details about this annex : see Official Journal of the European Patent Office, No. 12/82